Europäisches Patentamt

European Patent Office

Office européen des brevets

(19)

(11) Numéro de publication: **0 221 875**
**B1**

(12) **FASCICULE DE BREVET EUROPEEN**

(45) Date de publication du fascicule du brevet:
30.08.89

(51) Int. Cl.⁴: **B23D 61/02,** B28D 1/12,
B24D 5/12

(21) Numéro de dépôt: **86870121.0**

(22) Date de dépôt: **25.08.86**

(54) Lame de scie circulaire pour matériaux pierreux.

(30) Priorité: **04.09.85 BE 215541**

(43) Date de publication de la demande:
**13.05.87 Bulletin 87/20**

(45) Mention de la délivrance du brevet:
**30.08.89 Bulletin 89/35**

(84) Etats contractants désignés:
**AT BE CH DE FR GB IT LI LU NL SE**

(56) Documents cités:
**DE-A- 1 957 226**
**DE-A- 2 365 019**
**DE-A- 3 218 562**
**DE-A- 3 236 045**
**FR-A- 2 356 491**
**US-A- 4 034 639**

(73) Titulaire: **DIAMANT BOART Société Anonyme, Avenue
du Pont de Luttre, 74, B-1190 Bruxelles(BE)**

(72) Inventeur: **Hallez, Charles Pierre, 183c, rue Saint Joseph,
B-6934 Tellin(BE)**

(74) Mandataire: **De Brabanter, Maurice et al, Bureau
VANDER HAEGHEN 63 Avenue de la Toison d'Or,
B-1060 Bruxelles(BE)**

## Description

La présente invention est relative à une scie circulaire pour matériaux pierreux comportant une couronne périphérique garnie à son contour d'éléments coupants, une âme composite dont les faces latérales sont recouvertes de deux disques annulaires de même diamètre en tôle mince, assemblés par collage sous presse et dont le centre est muni d'une bague centrale permettant son montage sur un arbre moteur.

Elle trouve sa principale application dans la fabrication de disques de sciage légers et silencieux, aptes à présenter pendant l'opération de sciage une excellente résistance à la déviation malgré leur minceur.

On connaît, par la demande de brevet allemand DE-B 1 042 874, une scie circulaire silencieuse pour le débitage des matériaux pierreux. L'âme comprend deux minces disques métalliques annulaires de même diamètre coaxialement disposés de part et d'autre d'une feuille de matériau amortisseur. Ces disques sont assemblés fermement contre celle-ci par collage sous pression. L'interposition de la feuille absorbante permet d'atténuer et même d'éliminer le bruit engendré par l'interaction des éléments coupants et du matériau pierreux lors de l'application de l'effort de coupe.

Cette scie a cependant l'inconvénient de ne pas posséder une rigidité statique et dynamique suffisante puisqu'elle subit des déviations de coupe intolérables, lors du sciage de matériaux pierreux durs.

De même, il est connu, par la demande de brevet belge n° 843 686, une scie circulaire apte à reprendre les contraintes latérales et assurer une coupe plane.

Cette scie est formée de deux disques symétriques en tôles minces d'acier, embouties en forme de soucoupe. Dans la première forme de réalisation les disques sont accolés dos à dos de manière à former une scie circulaire biconcave dont les bords évasés sont maintenus distants par un anneau d'entretoisement. Dans une seconde forme de réalisation, les disques sont accolés face à face de manière à former un outil biseauté, dont la partie centrale est creuse. L'espace libre compris entre les disques est rempli d'un matériau amortisseur des vibrations.

Ce mode de réalisation rend la scie plus rigide mais cela ne permet pas de rendre celle-ci plus légère. En outre, la scie circulaire ainsi obtenue présente une âme dont l'épaisseur est sensiblement égale à celle des disques conventionnels. Elle ne permet donc pas de réduire les pertes de matières, lors du sciage.

L'objet de l'invention est une scie circulaire qui remédie à l'inconvénient précité. Elle a pour but de réaliser un disque de sciage permettant d'effectuer sans bruit et sans déviation au sciage, une coupe droite des pierres dures.

L'invention concerne une scie circulaire pour matériau pierreux comportant une couronne périphérique garnie à son contour d'éléments coupants, et qui entoure une âme composite dont les faces latérales sont recouvertes de deux disques annulaires de même diamètre en tôle mince, assemblés par collage sous presse et dont le centre est muni d'une bague centrale en vue de son montage sur un arbre moteur. L'âme de la scie est constituée d'un mince squelette possédant une structure alvéolaire à cellules ouvertes ou fermées sur laquelle sont appliqués les deux disques annulaires susdits.

Dans une première forme de réalisation particulière, l'âme est en métal léger, de préférence en structure de nid d'abeilles.

Dans une deuxième forme de réalisation, l'âme de la scie est une mousse dure en matière synthétique de structure alvéolaire à cellules ouvertes ou fermées.

L'âme est avantageusement enrobée et/ou remplie d'une matière élastique amortissante absorbant le bruit.

Suivant une particularité de l'invention, les disques annulaires sont des minces feuilles d'acier doux d'une épaisseur d'environ 0,10 à 0,60 mm, par exemple 0,15 pour un diamètre de 600 mm.

D'autres particularités et détails de l'invention, apparaîtront au cours de la description détaillée suivante en faisant référence aux dessins annexés au présent mémoire et qui représente schématiquement et à titre d'exemple seulement, deux formes de réalisation de l'invention.

**Dans ces dessins :**

- la figure 1 est une vue en élévation latérale partiellement arrachée d'une scie selon l'invention ;

- la figure 2 est une coupe détaillée de la figure 1, et

- la figure 3 est une coupe radiale partielle de la scie illustrée aux figures 1 et 2.

Dans ces diverses figures, les mêmes notations de référence désignent des éléments identiques ou analogues.

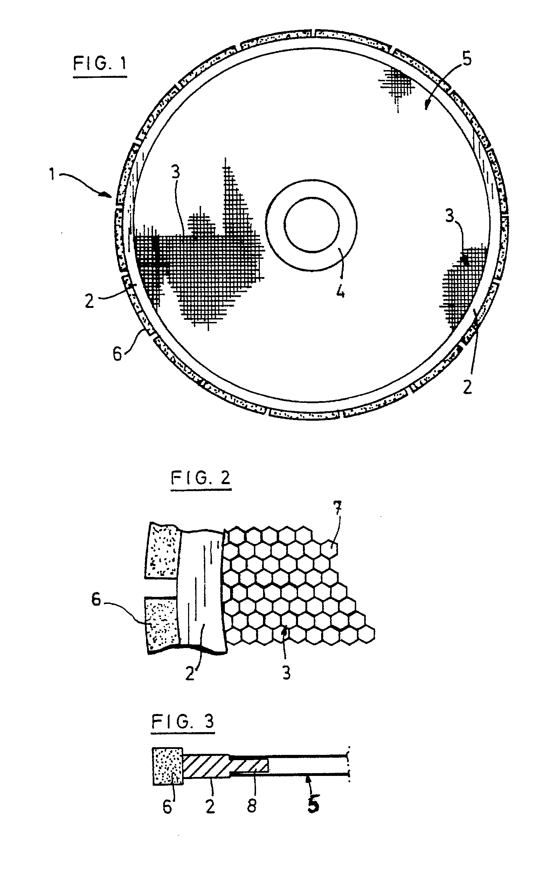

Comme illustré à la figure 1, une scie circulaire, selon l'invention, désignée dans son ensemble par la notation de référence 1, comporte une couronne périphérique 2, une âme composite 3 et une bague centrale 4, solidarisées entre elles par deux disques annulaires 5.

La couronne périphérique 2 entoure l'âme composite et est garnie à son contour d'éléments coupants, constitués par exemple de segments diamantés débordant légèrement de chaque côté de l'âme. Les segments diamantés sont brasés sur la couronne 2 ou éventuellement soudés au laser.

Dans une première forme de réalisation du disque de sciage selon l'invention, l'âme 3 est constituée d'une nappe métallique comportant une multitude de cellules hexagonales 7 formées de fines lamelles entrecroisées et disposées en nid d'abeilles. Cette grille alvéolée est disposée dans la partie annulaire de la couronne périphérique 2. Elle forme une armature métallique, au centre de laquelle est montée la bague d'assemblage 4. La couronne périphérique 2, l'âme 3 et la bague centrale 4 sont enserrées contre deux disques annulaires 5 minces de même diamètre, de manière à former un ensemble rigide.

La structure autoporteuse en nid d'abeilles est avantageusement remplie d'une matière amortissante apte à absorber le buit et diminuer le niveau sonore de l'outil en fonctionnement.

On peut également utiliser des mousses dures de matière synthétique présentant une structure poreuse à cellules fermées, telles que les matériaux ROHACELL ® produits par ROHM GmbH (Darmstadt RFA). Les matières synthétiques utilisées peuvent être le polyméthacrylimide, le polystyrène, le chlorure de polyvinyle, le polyuréthane et la résine phénolformaldéhyde.

Voici deux exemples de formes de réalisation d'une scie circulaire suivant l'invention que l'on peut fabriquer de la façon suivante :

EXEMPLE 1.

Une couronne périphérique 2 en tôle d'acier trempé d'une dureté Rockwell comprise entre 41 et 44 R$_c$ et d'environ 3,4 mm d'épaisseur, est découpée au laser, de manière à présenter un diamètre extérieur de 600 mm et un diamètre intérieur de 428 mm.

La couronne 2 est garnie sur son contour de segments diamantés d'une largeur de 4,5 mm montés en saillie sur la couronne en débordant de part et d'autre de celle-ci. Du côté intérieur, la couronne présente des épaulements 8 symétriques par rapport au plan médian.

La profondeur de l'épaulement 8 est de 0,20 mm. Elle correspond à l'épaisseur des disques d'acier augmentée de celle de la couche de colle. La largeur de l'épaulement 8 est de 20 mm.

Cette couronne est déposée sur un gabarit, non montré, préalablement recouvert d'un mince disque d'acier 5 de 0,15 mm d'épaisseur. Le disque est enduit sur sa surface supérieure de colle ESP 109 de la firme CCMP (Antwerpen). Il présente un diamètre légèrement inférieur au diamètre extérieur de chacun des épaulements de la couronne 2.

Une bague centrale 4 de 120 mm de diamètre extérieur et environ 38 mm d'épaisseur, pourvue d'un alésage, est également mise en place sur le gabarit susdit.

La couronne périphérique et la bague centrale 4 déterminent sur le gabarit un espace annulaire enrobé de colle.

On y dépose une structure alvéolée en nid d'abeilles. Cette structure se présente sous la forme d'une nappe 3 en métal léger, tel que l'aluminium. Pour préparer la structure susdite, on part d'un panneau de nid d'abeilles qu'on découpe aux dimensions requises.

A titre d'exemple de structure alvéolée utilisable, on peut citer celles connues sous les marques "HEXCEL" ou "CYANAMID", largement utilisées, notamment dans le domaine de l'aéronautique. Elles sont réalisées en divers matériaux métalliques ou non, par exemple aluminium, acier inoxydable, résines synthétiques du type KEVLAR ou NOMEX.

Selon une particularité de l'invention, les alvéoles 7 de l'âme 3 en nid d'abeilles sont remplies d'une poudre composée de copolymères d'éthylène et d'acétate de vinyle.

Le gabarit comprenant l'âme garnie de poudre est ensuite recouvert d'un second disque d'acier 5, de même épaisseur que le premier. Ce disque est préalablement enduit de colle ESP 109, apte à résister à une température d'environ 250 à 350°C>

L'ensemble est maintenu en place sous presse et placé en autoclave.

L'élévation de la température provoque la fusion et la copolymérisation de la poudre de copolymères qui forme ainsi une résine thermodurcissable, qui remplit chacune des alvéoles de la structure. Cette résine qui a d'excellentes propriétés d'insonorisation, empêche les alvéoles de jouer le rôle d'une cavité de résonance.

Cette résine contribue aussi à renforcer la solidité de la structure autoporteuse en rendant celle-ci plus rigide, et en assurant un meilleur ancrage des feuilles d'acier. De bons résultats sont obtenus avec une poudre LEVASINT „ par exemple, produite par BAYER.

La rigidité dynamique de la scie ainsi obtenue est supérieure à celle d'une scie circulaire massive conventionnelle.

On parvient en effet à assurer au disque composite une rigidité dynamique égale à celle des disques conventionnels, avec une âme d'épaisseur moindre constituée d'une structure en nid d'abeilles n'atteignant que 2,8 à 3,0 mm d'épaisseur environ recouverte de deux feuilles d'acier doux d'environ 0,15 mm d'épaisseur.

Les structures en nids d'abeilles ont l'avantage d'un poids beaucoup plus faible que les pièces massives ayant des propriétés mécaniques semblables.

Le gain en poids du disque composite actuel par rapport au disque conventionnel est très appréciable. La réduction de poids est de moitié environ. Pour un diamètre de 600 mm, le poids d'un disque conventionnel s'élève à 6,7 kg, alors qu'il n'atteint plus que 3,0 kg pour le disque composite selon l'invention.

Cette réduction de poids, rend les manipulations des disques de grand diamètre plus aisées.

EXEMPLE 2 :

On réalise un disque composite de diamètre extérieur de 900 mm en montant une couronne périphérique de 888 mm de diamètre extérieur et 708 mm de diamètre intérieur et 3,6 mm d'épaisseur, sur une structure mé tallique auto-portante en nid d'abeilles d'épaisseur de 3,0 mm.

Les épaulements de 0,3 mm de profondeur ménagés dans les flancs de la couronne périphérique et de l'âme en structure de nid d'abeilles sont recouverts de deux disques annulaires en tôle fine d'acier doux de 0,5 mm d'épaisseur. L'épaisseur totale de l'âme du disque composite s'élève donc à 3,6 mm, alors qu'elle dépasse 4,75 mm dans un disque conventionnel de même diamètre.

La couronne périphérique du disque composite de 900 mm peut être munie de segments dont l'épaisseur ne dépasse pas 5.0 mm alors que dans un disque standard l'épaisseur minimale des segments et d'au moins 6.5 mm.

Cette diminution sensible de l'épaisseur des segments permet une économie de la quantité de concrétion diamanrée à mettre en oeuvre d'environ 25%. Elle permet également de réduire dans des proportions identiques, les pertes de matières et la consommation d'énergie lors du sciage.

La différence de poids entre un disque composite selon l'invention et un disque conventionnel est plus importante encore. Alors qu'un disque 900 mm conventionnel pèse 23 kg, ce poids est ramené à 7 kg en mettant en oeuvre une âme composite.

Dans ce but, on remplit la structure en nid d'abeilles d'un produit élastomère à base de silicone. On utilise avantageusement du **GOLDEN HERMETITE** ® que l'on étend de manière homogène avec une spatule avant que le produit n'ait le temps d'adhérer. Il se forme par séchage une résine élastique qui résiste à des températures comprises entre - 40 et + 250°C. Ces deux disques annulaires d'acier doux d'environ 0.15 mm d'épaisseur sont fixés sur les faces latérales de la structure en nid d'abeilles à l'aide de colle ESP 109, identique à celle décrite dans l'exemple 1.

Des essais comparatifs de sciage de balmoral présentant une dureté Shore supérieure à 105 ont été effectués sur banc d'essai avec des scies de 900 mm de diamètre. Il s'agit en fait d'un granit à forte teneur en quartz. Le niveau sonore, mesuré autour du banc d'essai démuni de protection acoustique, à l'aide d'un analyseur statique de niveaux de bruit **"BRUEL et KJAER"** à une distance de 1 m, décroît d'environ 5 dB(A) en passant de 97 dB(A) pour une scie classique à 92 dB (A) pour une scie suivant l'invention. La vitesse périphérique de la scie est de 38 m/s.

Il est évident que l'invention n'est pas limitée aux modes de mise en oeuvre du procédé décrit ci-dessus et que de nombreuses modifications peuvent être apportées à ces derniers sans pour autant les soustraire de la portée des revendications suivantes.

Ainsi la matière absorbante, destinée à réduire la bruyance de la scie, peut être constituée d'une mousse de silicone au lieu du copolymère décrit ci-dessus.

On peut éventuellement renforcer le collage des feuilles latérales au niveau de la couronne périphérique et de la bague centrale par une soudure au laser.

**Revendications**

1. Scie circulaire (1) pour matériau pierreux comportant une couronne périphérique (2) garnie à son contour d'éléments coupants (6), et qui entoure une âme composite (3) dont les faces latérales sont recouvertes de deux disques annulaires (5) de même diamètre en tôle mince, assemblés par collage sous presse et dont le centre est muni d'une bague centrale (4) permettant son montage sur un arbre moteur, caractérisée en ce que l'âme (3) est constituée d'un mince squelette possédant une structure alvéolaire à cellules ouvertes ou fermées sur laquelle sont appliqués les deux disques annulaires (5) susdits.

2. Scie circulaire suivant la revendication 1, caractérisée en ce que l'âme (3) est en structure de nid d'abeilles.

3. Scie circulaire suivant la revendication 1, caractérisée en ce que l'âme est en métal léger.

4. Scie circulaire suivant la revendication 1, caractérisée en ce que l'âme (3) de scie est une mousse dure en matière synthétique de structure alvéolaire à cellules fermées.

5. Scie circulaire suivant la revendication 1 ou 4, caractérisée en ce que l'âme (3) est enrobée et/ou remplie d'une matière élastique amortissante absorbant le bruit.

6. Scie circulaire selon l'une quelconque des revendication précédentes, caractérisée en ce que l'âme (3) a une épaisseur comprise entre 2,8 et 5,0 mm, par exemple 3,0 mm pour un diamètre du disque de sciage de 600 mm et 3,6 mm pour un diamètre de 900 mm ou davantage.

7. Scie circulaire selon la revendications 5, caractérisée en ce que la matière amortissante est une mousse de polyuréthane.

8. Scie circulaire selon la revendications 5, caractérisée en ce que la matière amortissante est une mousse de silicone.

9. Scie circulaire selon l'une quelconque des revendications précédentes, caractérisée en ce que les disques annulaires (5) sont des minces feuilles d'acier doux d'une épaisseur d'environ 0,10 à 0,60 mm, par exemple 0,15 mm pour un diamètre de 600 mm.

**Patentansprüche**

1. Kreissägeblatt (1) für steinartiges Material, mit einem an seinem Umfang mit Schneidelementen (6) bestückten peripheren Kranz, der einen Verbundkern (3) umgibt, dessen Seitenflächen mit zwei durch Preßklebung montierten Ringscheiben (5) aus Feinblech gleichen Durchmessers abgedeckt sind und dessen Zentrum mit einem zentralen Ring (4) versehen ist, der seine Montage auf einer Motorwelle erlaubt, dadurch gekennzeichnet, daß dieser Kern (3) von einem dünnen Skelett gebildet ist, das eine Zellstruktur mit offenen oder geschlossenen Zellen besitzt und auf das die beiden oben genannten Ringscheiben (5) aufgebracht sind.

2. Kreissägeblatt nach Anspruch 1, dadurch gekennzeichnet, daß der Kern (3) eine Bienenwabenstruktur besitzt.

3. Kreissägeblatt nach Anspruch 1, dadurch gekennzeichnet, daß der Kern aus Leichtmetall besteht.

4. Kreissägeblatt nach Anspruch 1, dadurch gekennzeichnet, daß der Kern (3) des Sägeblattes aus einem geschlossenzelligen Kunststoff-Hartschaum besteht.

5. Kreissägeblatt nach Anspruch 1 oder 4, dadurch gekennzeichnet, daß der Kern (3) mit einem schalldämmenden elastischen Dämmstoff umhüllt und/oder gefüllt ist.

6. Kreissägeblatt nach irgendeinem der vorhergenden Ansprüche, dadurch gekennzeichnet, daß der Kern (3) eine Dicke zwischen 2,8 und 5,0 mm, z.B. eine Dicke von 3,0 mm für einen Sägeblattdurchmesser von 600 mm und eine Dicke von 3,6 mm für einen Durchmesser von 900 mm oder mehr, besitzt.

7. Kreissägeblatt nach Anspruch 5, dadurch gekennzeichnet, daß der Dämmstoff ein Polyurethanschaum ist.

8. Kreissägeblatt nach Anspruch 5, dadurch gekennzeichnet, daß der Dämmstoff ein Silikonschaum ist.

9. Kreissägeblatt nach irgendeinem der vorhergehenden Ansprüche, dadurch gekennzeichnet, daß die Ringscheiben (5) dünne Folien aus weichem Stahl einer Dicke von etwa 0,10 bis 0,60 mm, beispielsweise von 0,15 mm für einen Durchmesser von 600 mm, sind.

## Claims

1. Circular saw (1) for stony material comprising a peripheral ring (2) set at its edge with cutting elements (6), and which surrounds a composite core (3) the lateral faces of which are covered with two annular discs (5) of thin sheet metal of the same diameter, assembled by bonding under a press, the centre of which is fitted with a central bush (4) enabling it to be mounted on a motor shaft, characterised in that the core (3) consists of a thin skeleton possessing an alveolate structure having open or closed cells onto which are applied the two abovementioned annular discs (5).

2. Circular saw according to claim 1, characterised in that the core (3) is of honeycomb structure.

3. Circular saw according to claim 1, characterised in that the core is of light metal.

4. Circular saw according to claim 1, characterised in that the core (3) of the saw is a rigid foam of synthetic material of alveolate structure with closed cells.

5. Circular saw according to claim 1 or 4, characterised in that the core (3) is coated and/or filled with a noise-absorbing, damping elastic material.

6. Circular saw according to any one of the preceding claims, characterised in that the core (3) has a thickness of between 2.8 and 5.0 mm, for example 3.0 mm for a 600 mm diameter of the sawing disc and 3.6 mm for a diameter of 900 mm or more.

7. Circular saw according to claim 5, characterised in that the damping material is a polyurethane foam.

8. Circular saw according to claim 5, characterised in that the damping material is a silicone foam.

9. Circular saw according to any one of the preceding claims, characterised in that the annular discs (5) are thin sheets of mild steel having a thickness of about 0.10 to 0.60 mm, for example 0.15 mm for a diameter of 600 mm.

FIG. 1

FIG. 2

FIG. 3